# EUROPEAN PATENT SPECIFICATION

(11) **EP 1 784 051 B1**
(45) Date of publication and mention of the grant of the patent: **14.01.2009**
(21) Application number: 06123382.1
(22) Date of filing: 02.11.2006
(51) Int. Cl.: H05B 6/02, H05B 6/36, H05B 6/44, B29C 35/04

(54) **Heating medium passing roller device**
Durchlaufrollenvorrichtung für Heizmittel
Dispositif de passage à rouleau pour moyens de chauffage

(30) Priority: 04.11.2005 JP 2005320604
(43) Date of publication of application: 09.05.2007
(73) Proprietor: Tokuden Co., Ltd, Kyoto-shi, Kyoto (JP)
(72) Inventor: Tonomura, Toru, Yamashina-ku, Kyoto-shi, Kyoto (JP)
(74) Representative: TBK-Patent

(56) References cited:
- EP-A- 0 462 544
- WO-A2-00/07486
- FR-A- 802 634
- GB-A- 376 028
- GB-A- 2 130 058
- JP-A- 2004 116 538
- JP-A- 2004 195 888
- US-A- 4 602 140

## Description

### BACKGROUND OF THE INVENTION

This invention relates to a heating medium passing roller device.

It is prevalent that a treated object such as a resin film hung on a roller is heated to a predetermined temperature while it moves in contact with the roller and the treated object at a high temperature is heat-deprived to another predetermined temperature. In heating treatment, the roller is heated to the temperature necessary for heat-treatment. In heat-depriving treatment, the temperature of the roller itself is enhanced owing to the operation of depriving the heat from the treated object so that the roller is cooled to the temperature suitable to cooling the treated object. In either case, a heating medium for conducting heat to the roller is required. As the heating medium, fluid such as oil may be adopted.

As a roller device used in this case, a heating medium passing roller device has been developed in which within the wall in the vicinity of the surface of a roll shell constituting a roller body, a sealing chamber sealed with a vapor-liquid two-phase heating medium is formed in the same direction as the axial direction, and in addition, the roll shell is arranged on a circulating path through which the heating medium of fluid circulates via a heating device and the heating medium heated is passed through the roll shell to heat the roll shell to a predetermined temperature. In this roller device, in cooperation with movement of latent heat of the gas-liquid two-phase heating medium in the sealing chamber, the flow rate of the heating medium passing through the roll shell, i.e. flow rate thereof through the circulating path can be reduced, so that a tube diameter and pump capacity are reduced, thereby saving energy.
[Patent Reference 1] JP-A-2004-195888
[Patent Reference 2] JP-A-2004-116538

In non-related technical fields, the usage of induction coil heating is known. As examples, WO 00/07586 A2, GB 2 130 058 A, FR 802 634 A, GB 376 028 A, US 4 0602 140 A and EP 0 462 544 A disclose a means for heating liquid using induction. To be precise, the means as defined in these disclosures basically include a magnetic core, a primary and a secondary coil with the ends of the second coil short cut, and a through-hole for conducting liquid to be heated by induction generated by a current flowing through the short cut coil.

However, as a heating source for heating the circulating heating medium, a resistance heating wire with a small heat generating area is employed. Therefore, in order to conduct a large- quantity of heat to the fluid, the temperature of the resistance must be set at a high temperature, i.e. a large difference must be taken between the heat generating temperature of the resistance heating wire and the temperature of the fluid heated by the resistance heating wire. However, the temperature of the resistance heating wire cannot be increased to exceed the withstand temperature of the fluid, so that as the case may be, a predetermined quantity of heat cannot be conducted to the fluid.

### SUMMARY OF THE INVENTION

An object of this invention is to solve the above problem to reduce a difference between a heat generating temperature of a heating element and the temperature of a fluid heated by the heating element so that a predetermined quantity of heat can be conducted to the fluid at a temperature not higher than the withstand temperature of the fluid.

According to a first aspect of the present invention, there is provided a heating medium passing roller device including a fluid heating device arranged on a fluid circulating path for heating fluid flowing through the fluid circulating path, wherein the fluid heating device includes:
a closed magnetic circuit iron core,
a primary coil wound around the iron core, and
a secondary coil wound around a conductor formed with a through-hole for passing circulating fluid, wherein
both ends of the secondary coil are electrically short-circuited to each other, and wherein
heat generated by a current flowing the secondary coil short-circuited is conducted to the fluid flowing through the through-hole, the fluid heating device further comprises:
   a roller which is adapted to be heated, when fluid heated by the heating device flows within the roller, wherein
   a processed object in contact with the surface of the roller is heat treated.

According to a second aspect of the present invention, there is provided the heating medium passing roller device according to the first aspect, further including:
a sealing chamber extending in the same direction as the axial direction of the roller, the sealing chamber being formed within a wall of the roller, wherein
the sealing chamber is sealed with a gas-liquid two-phase heating medium.

In this invention, in a transformer configuration having a primary coil wound around the closed iron core and a secondary coil, the secondary coil is formed by winding a conductor formed with a through-hole for passing circulating fluid, both ends of the secondary coil are electrically short-circuited to each other, and heat generated by a current flowing through the secondary coil short-circuited is conducted to the fluid flowing through the through-hole. In accordance with such a configuration, the heat generating area in contact with the fluid can be increased. So even if the difference between the heat generating temperature of the secondary coil and the temperature of the fluid heated by the secondary coil is decreased, a predetermined quantity of heat can be conducted to the fluid. Further, since the transformer configuration equipped with the closed magnetic circuit iron core is adopted, the power factor is as high as 70 to 100 % and so the fluid can be heated by a small power source. Particularly, the fluid heating device according to this invention is preferably applied to a heating source for the heating medium in a roller device for heating the object using the heated heating medium passing through the tube having a small diameter.

### BRIEF DESCRIPTION OF THE DRAWINGS

Figs. 1A and 1B are configuration views showing the configuration of a fluid heating device according to an embodiment of this invention; Fig. 1A is a top view and Fig. 1B is a side view.
Fig. 2 is a coil sectional view.
Figs. 3A and 3B are configuration views showing the configuration of a fluid heating device according to another embodiment of this invention; Fig. 3A is a top view and Fig. 3B is a side view.
Fig. 4 is a coil sectional view.
Fig. 5 is a configuration view showing the entire configuration of a heating medium passing roller according to an embodiment of this invention.

### DETAILED DESCRIPTION OF THE PREFERRED EMBODIMENTS

An object of this invention is to decrease the difference between the heat generating temperature of a heating element and the temperature of the fluid heated by the heating element so as to conduct a predetermined quantity of heat to the fluid irrespective of the withstand temperature of the fluid. This object can be realized in a configuration in which in the transformer configuration including the closed magnetic circuit iron core, primary coil wound around the iron core and secondary coil with its both ends electrically short-circuited to each other, the conductor serving as the secondary coil is formed of a tube, the fluid is passed through a hollow interior of the tube and the heat generated by the secondary coil short-circuited is conducted to the fluid flowing through the interior of the tube.

### (Embodiment 1)

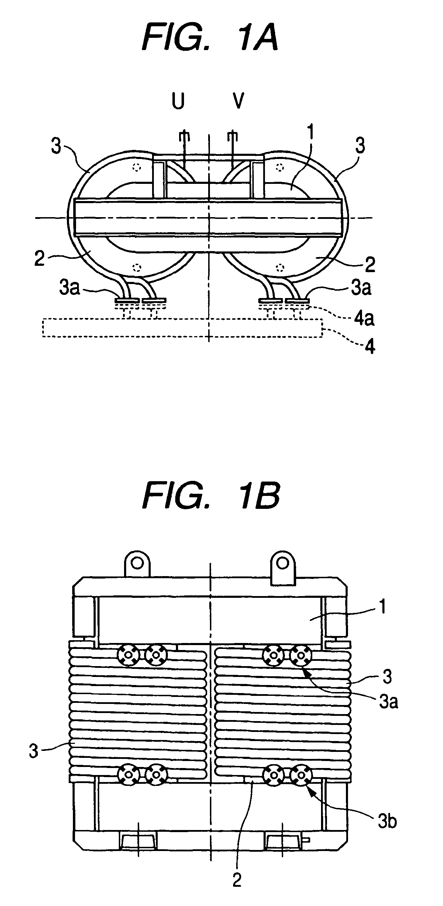

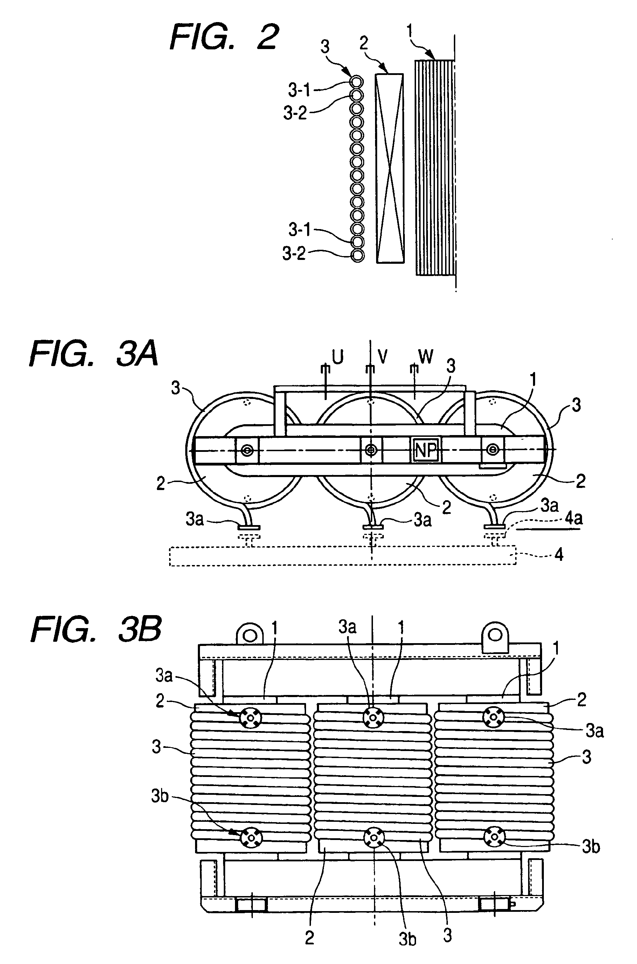

Fig. 1 is a configuration view showing the configuration of a fluid heating device according to an embodiment of this invention. Fig. 1A is a top view and Fig. 1B is a side view. Fig. 2 is a coil sectional view. In Figs. 1 and 2, reference numeral 1 denotes an iron core; 2 one of primary coils; 3 one of secondary coils; and 4 a header tube through which circulating fluid is passed. The iron core 1 forms a closed magnetic circuit in which a yoke iron core is provided with iron core legs at its both ends. The primary coils 2 are wound around the core legs at both ends of the iron core 1, respectively. The secondary coils 3 each are formed of a tubular conductor made of SUS (stainless steel) having a through-hole, and are wound along the outer periphery of the primary coils 2. In this embodiment, the secondary coils 3 are wound in parallel as two coils 3-1 and 3-2. Both ends of each of the secondary coils 3 are electrically short-circuited to each other by the conductor for short-circuiting.

Where the fluid heating device configured as described above is arranged on a fluid circulating path, flanges 3a, 3b formed at both ends of each the secondary coils 3 and a flange 4a of the header tube 4 are coupled with each other. By this coupling, the circulating fluid circulates via the through-hole of each of the secondary coils 3. In this embodiment, the primary coils 2 are connected in parallel. Thus, when a single-phase (U-V) AC voltage is applied to each of the primary coils 2, a short-circuiting current flows through the secondary coil 3 via the conductor for short-circuiting. Owing to this current, the secondary coil 3 is resistance-heated. The heat generated is conducted to the fluid flowing through the through-hole, and the fluid is heated while it flows through the through-hole.

In the embodiment shown in Fig. 1, the two primary coils 2 are wound around the closed magnetic circuit iron core 1. In this case, the two secondary coils 3, i.e. two parallel flow paths each with both ends short-circuited are given for the primary coils 2, respectively. However, the number of the primary coils 2 and secondary coils 3 may be optional. Further, as "single winding", a part of the primary coil may be short-circuited to form the secondary coil.

### (Embodiment 2)

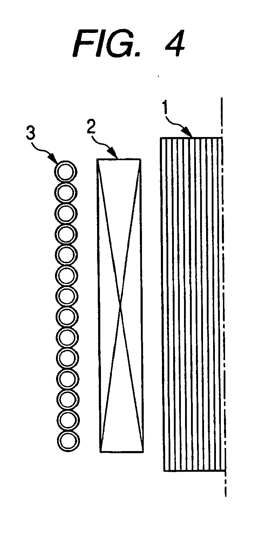

Fig. 3 is a configuration view showing the configuration of a fluid heating device according to another embodiment of this invention. Fig. 3A is a top view and Fig. 3B is a side view. Fig. 4 is a coil sectional view. This embodiment relates to the fluid heating device in which a three-phase AC voltage is employed. In this embodiment, like reference numerals refer to like parts in the embodiment shown in Fig. 1. The iron core 1 forms a closed magnetic circuit in which a yoke iron core is provided with iron core legs at its both ends and center. The primary coils 2 are wound around the iron core legs, respectively. The secondary coils 3 each are formed of a tubular conductor made of SUS (stainless steel) having a through-hole and are wound along the outer periphery of the primary coils 2, respectively. In this embodiment, as seen from Fig. 3, each of the secondary coils 3 is formed of a single coil. The ends at both sides of each of the secondary coils 3 are electrically short-circuited by the conductor for short-circuiting.

Where the fluid heating device configured as described above is arranged on a fluid circulating path, flanges 3a, 3b formed at both ends of each the secondary coils 3 and a flange 4a of the header tube 4 are coupled with each other. By this coupling, the circulating fluid circulates via the through-hole of each of the secondary coils 3. In this embodiment, the primary coils 2 are connected in Δ (delta) connection. Thus, when a three-phase (U-V, V-W, W-U) AC voltage is applied to each of the primary coils 2, a short-circuiting current flows through the secondary coil 3 via the conductor for short-circuiting. Owing to this current, the secondary coil 3 is resistance-heated. The heat generated is conducted to the fluid flowing through the through-hole, and the fluid is heated while it flows through the through-hole.

In the embodiment shown in Fig. 3, three primary coils 2 are wound around the closed magnetic circuit iron core 1 and connected in Δ (delta) connection. However, the primary coils may be connected in Y connection, and as "single winding", a part of the primary coil may be short-circuited to form the secondary coil. Further, using the two primary coils, the one end of the one primary coil may be connected to the center of the other primary coil whereas the other end of the one primary coil and both ends of the other primary coil may be connected to the phases (U, V, W) of the three-phase AC power source, respectively. In this case, the primary coils and secondary coils can be wound around the two closed magnetic circuit iron cores.

In both of the first embodiment and the second embodiment, in the transformer configuration having a primary coil and a secondary coil wound around the closed magnetic circuit iron core, the secondary coil is formed by winding a conductor with a through-hole for passing circulating fluid, both ends of the secondary coil are electrically short-circuited to each other, and the heat of the secondary coil generated owing to the short-circuiting is conducted to the fluid flowing through the through-hole. In accordance with such a configuration, the heat generating area in contact with the fluid can be increased. So even if the difference between the heat generating temperature of the secondary coil and the temperature of the fluid generated by the secondary coil is decreased, a predetermined quantity of heat can be conducted to the fluid. Further, since the transformer configuration equipped with the closed magnetic circuit is adopted, the power factor is as high as 70 to 100 % and so the fluid can be efficiently heated by a small power source.

### (Embodiment 3)

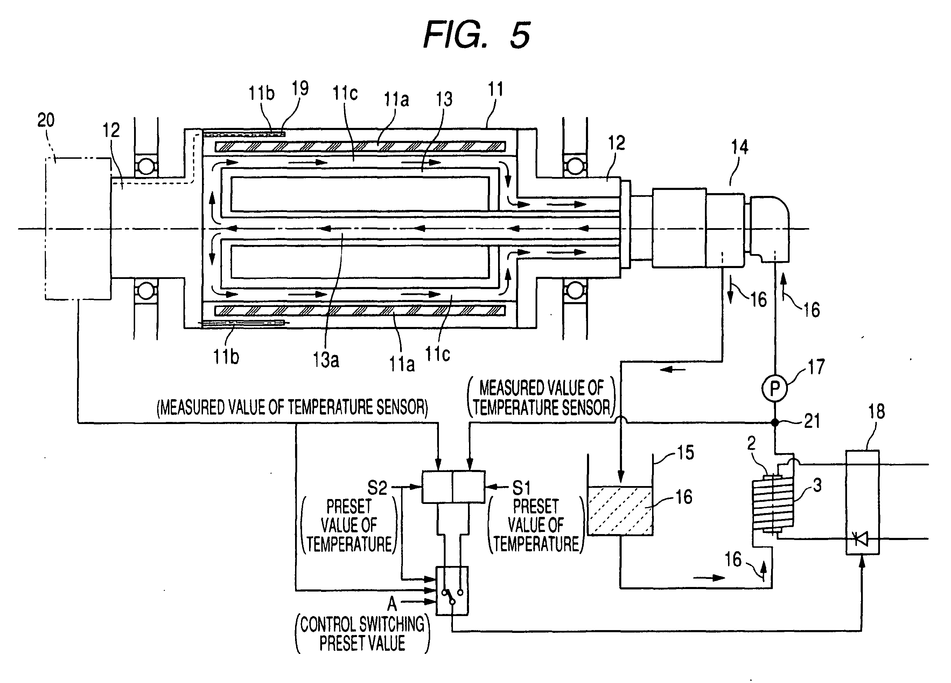

Fig. 5 shows an exemplary application of the fluid heating device configured as described above to a heating medium passing roller device. In Fig. 5, reference numeral 2 denotes a primary coil wound around a closed magnetic circuit iron core (not shown); 3 a tubular secondary coil; 11 a roll shell constituting a roller body; 12 a rotary driving shaft which is rotated by a motor (not shown) to rotate the roll shell; 13 a core; 14 a rotary joint; 15 a storage tank; 16 an oil (heating medium); 17 a pump; and 18 an electric power control circuit such as a thyristor.

The roll shell 11 is formed in a cylindrical shape. In this example, within the wall of the roller, a sealing chamber 11a and a temperature sensor inserting hole 11b are formed to extend in the same direction as the axial direction of the roll shell 11. The sealing chamber 11a is sealed with a gas-liquid two-phase heating medium such as water which serves to make the temperature of the surface of the roll shell 11 uniform by movement of latent heat. Within the temperature sensor inserting hole 11b, a temperature sensor 19 is arranged for detecting the surface temperature of the roll shell 11. Within the hollow interior of the roll shell 11, the core 13 is arranged. A heating medium-flow path 13a is formed to penetrate the center of the core 13. The heating medium flow path 13a is coupled with an flowing inlet of the rotary joint 14 via the interior of the rotary driving shaft 12. The heading medium flow path 11c formed between the inner wall of the roll shell 11 and the outer wall of the core 13 is coupled with the outlet of the rotary joint 14 via the interior of the rotary driving shaft 12. As the case may be, the heating medium may flow from the one end of the roll shell 11 to the other end thereof.

The oil (heating medium) 16 of the storage tank 15 flows through the tubular secondary coil 3 so that it is heated to a predetermined temperature. The oil 16 is supplied into the roll shell 11 by the bump 17. The oil 16 flows through the heating medium flowing paths 13a and 11c, and is exhausted toward the storage tank 15. Another temperature sensor 21 is arranged to detect the temperature of the heating medium 16 supplied from the tubular secondary coil 3 into the roll shell 11. The detected temperature of the temperature sensor 21 and that of the temperature sensor 19 which is taken out from the roll of a rolling object, for example, taken out through the rotary transformer 20 are compared with target values S1 and S2 as required. The control signal corresponding to the difference based on the comparison is supplied to the power control circuit 18 so that the current to be passed through the primary coil 2 is controlled, thereby controlling the temperature of the heating medium 16 flowing through the secondary coil 3.

In the heating medium passing roller device configured as described above, the circulating heating medium 16, while it flows through the tubular secondary coil 3, is heated by the entire inner wall thereof so that the heat conducting area for the heating medium 16 is increased. Thus, the temperature of the heating medium 16 to be supplied into the roller can be easily controlled, thereby realizing the heating with high efficiency. Further, the flow rate of the heating medium 16 within the tubular secondary coil 3 can be increased to form a structure in which the heating medium is difficult to be overheated.

Additionally, the heating medium passing roller device as described above has the sealing chamber sealed with the gas-liquid two-phase heating medium within the wall of the roll shell. However, the heating medium passing roller device not having such a sealing chamber can also present the same effect.

A fluid heating device is arranged on a fluid circulating path in e.g. a heating medium passing roller device and heats fluid flowing through the fluid circulating path. In this fluid heating device, a secondary coil 3 of a transformer configuration having a primary coil 2 and the secondary coil 3 which are wound around a closed magnetic circuit iron core 1 is formed by winding a conductor made of e.g. SUS having a through-hole for passing circulating fluid. Both ends of the secondary coil 3 are electrically short-circuited to each other. The heat of the secondary coil 3 generated owing to the short-circuiting is conducted to the fluid flowing through the through-hole of the secondary coil 3.

## Claims

1. A heating medium passing roller device comprising:
a fluid heating device arranged on a fluid circulating path for heating fluid flowing through the fluid circulating path, comprising:
a closed magnetic circuit iron core **(1),**
a primary coil **(2)** wound around the iron core **(1),** and
a secondary coil **(3)** wound around a conductor formed with a through-hole for passing circulating fluid, wherein
both ends of the secondary coil **(3)** are electrically short-circuited to each other, and wherein
heat generated by a current flowing the secondary coil **(3)** short-circuited is conducted to the fluid flowing through the through-hole,
the heating medium passing roller device further comprises a roller **(11)** which is adapted to be heated, when fluid **(16)** heated by the heating device flows within the roller **(11),**
wherein a processed object in contact with the surface of the roller is heat treated.

2. The heating medium passing roller device according to claim 1, further comprising:
a sealing chamber **(11a)** extending in the same direction as the axial direction of the roller **(11),** the sealing chamber **(11a)** being formed within a wall of the roller **(11),** wherein
the sealing chamber **(11a)** is sealed with a gas-liquid two-phase heating medium.

## Patentansprüche

1. Heizmitteldurchlaufrollenvorrichtung, mit:
einer Fluidaufheizvorrichtung, die an einem Fluidzirkulationspfad angeordnet ist, zum Aufheizen eines durch den Fluidzirkulationspfad fließenden Fluids, mit:
einem Eisenkern (1) eines geschlossenen Magnetkreises,
einer Primärspule (2), die um den Eisenkern (1) gewickelt ist, und
einer Sekundärspule (3), die um einen Leiter gewickelt ist, der mit einer Durchgangsbohrung zum Durchlaufen des Zirkulationsfluids ausgebildet ist, wobei
beide Enden der Sekundärspule (3) miteinender elektrisch kurzgeschlossen sind, und wobei
durch einen die kurzgeschlossene Sekundärspule (3) durchfließenden Strom erzeugte Hitze an das die Durchgangsbohrung durchfließende Fluid abgeführt wird,
die Heizmitteldurchlaufrollenvorrichtung weiterhin eine Rolle (11) aufweist, die eingerichtet ist, um aufgeheizt zu werden, wenn durch die Aufheizvorrictung aufgeheiztes Fluid innerhalb der Rolle (11) fließt,
wobei ein mit der Oberfläche der Rolle (11) in Kontakt stehendes verarbeitetes Objekt wärmebehandelt wird.

2. Heizmitteldurchlaufrollenvorrichtung gemäß Anspruch 1, weiterhin mit:
einer Dichtungskammer (11a), die sich in der gleichen Richtung erstreckt, in der die Axialrichtung der Rolle (11) verläuft, wobei die Dichtungskammer (11a) innerhalb einer Wandung der Rolle (11) ausgebildet ist, wobei
die Dichtungskammer (11a) mit einem Gas-Flüssigkeits-Zweiphasenheizmittel abgedichtet ist.

## Revendications

1. Dispositif de rouleau de passage à moyen chauffant comprenant:
un dispositif de chauffage de fluide agencé sur un chemin de circulation de fluide pour chauffer un fluide circulant à travers le chemin de circulation de fluide, comprenant:
un noyau en fer (1) de circuit magnétique fermé,
une bobine principale (2) enroulée autour du noyau en fer (1), et
une bobine secondaire (3) enroulée autour d'un conducteur formé avec un trou traversant pour faire passer le fluide en circulation, dans lequel
les deux extrémités de la bobine secondaire (3) sont électriquement court-circuitées entre elles, et dans lequel
la chaleur générée par un courant électrique circulant à travers la bobine secondaire (3) court-circuitée est menée au fluide circulant à travers le trou traversant,
le dispositif de rouleau de passage à moyen chauffant comprend en plus un rouleau (11) qui est adapté pour être chauffé, lorsqu'un fluide (16) chauffé par le dispositif de chauffage circule dans le rouleau (11),
où un objet traité en contact avec la surface du rouleau est traité thermiquement.

2. Dispositif de rouleau de passage à moyen chauffant selon la revendication 1, comprenant en plus:
une chambre d'étanchéité (11a) s'étendant dans la même direction que la direction axiale du rouleau (11), la chambre d'étanchéité (11a) étant formée dans une paroi du rouleau (11), où
la chambre d'étanchéité (11a) est scellée avec un moyen chauffant à deux phases gaz-liquide.
